# FASCICULE DE BREVET EUROPEEN

(11) **EP 0 788 780 B1**
(45) Date de publication et mention de la délivrance du brevet: **15.05.2002**
(21) Numéro de dépôt: 96109630.2
(22) Date de dépôt: 15.06.1996
(51) Int. Cl.: A61C 5/02

(54) **Jeu de forets pour l'alésage de la partie coronaire des canaux radiculaires dentaires**
Bohrersatz zur Bearbeitung des koronalen Bereiches von Zahnwurzelkanälen
Set of drills for the preparation of the coronary region of dental root canals

(30) Priorité: 17.01.1996 CH 12596
(43) Date de publication de la demande: 13.08.1997
(73) Titulaire: MAILLEFER INSTRUMENTS S.A., CH-1338 Ballaigues (CH)
(72) Inventeur: Malentacca, Augusto, Dr., 00195 Roma (IT)
(74) Mandataire: Micheli & Cie

(56) Documents cités:
- EP-A- 0 136 500
- EP-A- 0 684 019
- WO-A-90/13267
- US-A- 4 340 364

## Description

La présente invention a pour objet un jeu de forets pour l'alésage de la partie coronaire des canaux radiculaires dentaires, du type dit de Gates, comprenant une tige se terminant, à son extrémité antérieure, par une tête de coupe présentant au moins une gorge hélicoïdale à arête coupante et se terminant, à son extrémité postérieure, par un manche, jeu dans lequel le diamètre de ladite tête coupante varie d'un foret à l'autre.

De tels jeux de forets sont connus.

Le praticien qui alèse le tiers coronaire des canaux radiculaires dentaires, après avoir effectué manuellement la première étape, dite de cathétérisme, qui consiste à engager dans le canal radiculaire un instrument très fin, jusqu'au foramen apical, utilise ensuite des forets de Gates, entraînés mécaniquement à l'aide d'un contre-angle, soit en passant du foret dont la tête coupante est de plus petit diamètre jusqu'au foret dont la tête est de plus grand diamètre, en une opération dite "step-back", soit en commençant par le foret dont le diamètre de la tête coupante est le plus grand pour terminer par le foret dont la tête coupante est de plus petit diamètre, en une opération dite "crown-down". Le praticien doit veiller à régler la profondeur de l'alésage en fonction du numéro du foret utilisé, le foret dont la tête est de plus petit diamètre étant engagé le plus profondément et le foret dont la tête est du plus giand diamètre étant engagé le moins profondément. L'alésage de la partie coronaire du canal radiculaire présente ainsi une forme évasée qui favorise l'obturation.

Certes, le dentiste peut s'aider, pour la détermination de la profondeur à laquelle doit pénétrer chaque foret, de rondelles de repérage engagées sur la tige ou col desdits forets. Il n'en reste pas moins que cela requiert de sa part un certain savoir-faire et que les risques d'erreurs ne sont pas exclus.

Le but de la présente invention est de remédier à cet inconvénient.

Ce but est atteint grâce aux moyens définis dans la revendication 1.

Le dessin représente, à titre d'exemple, une forme d'exécution de l'objet de l'invention.
La fig. 1 est une vue en élévation d'un foret de Gates, et
La fig. 2 est une vue en élévation de six forets de Gates appartenant à un même jeu.

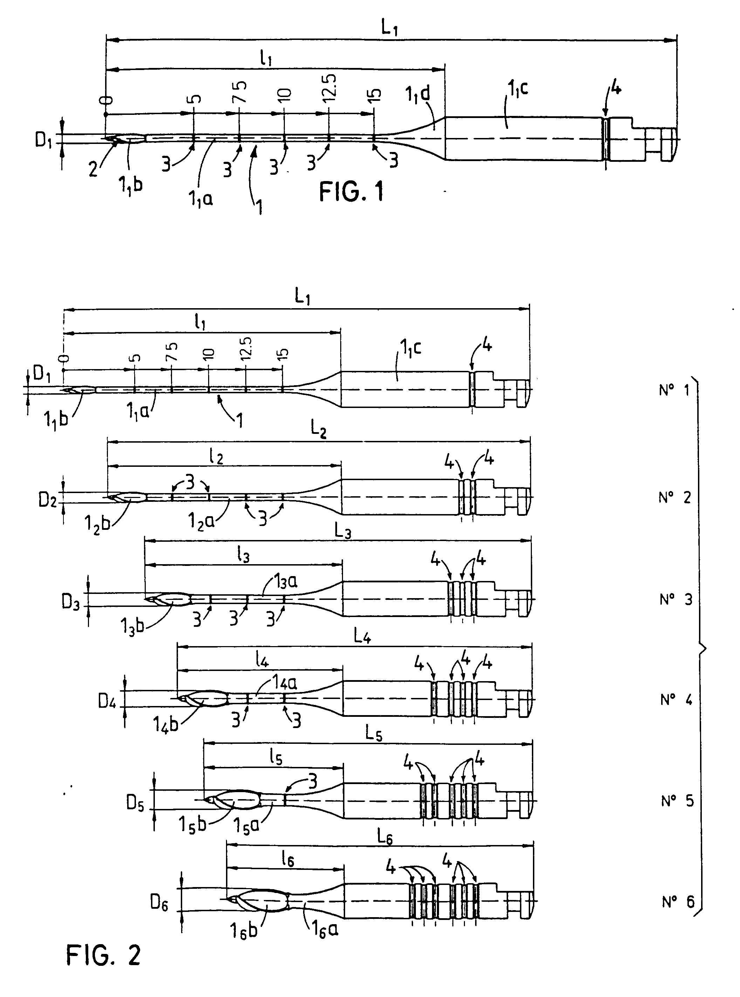

Le foret illustré à la fig. 1, désigné par l₁, qui est le premier du jeu représenté à la fig. 2, comprend une tige cylindrique ou col 1₁a se terminant, à son extrémité antérieure, par une tête coupante 1₁b et, à son extrémité postérieure, par un manche 1₁c destiné à s'engager dans une pièce à main servant à l'entraînement mécanique du foret. La tige 1 sera réalisée en tout alliage à haute flexibilité.

La tête coupante 1₁b a la forme d'un corps de révolution dont la génératrice est constituée par un arc de cercle et présente trois gorges hélicoïdales 2, à arête coupante. Le nombre des gorges 2 pourra être différent de trois.

Dans le cas du foret de la fig. 1, qui constitue le foret No 1 du jeu, le diamètre D₁ de la tête coupante 1₁b est de 0,50mm. La longueur totale L₁ du foret est de 32 mm. La longueur de sa partie active ou opérante l₁, c'est-à-dire de sa tige 1₁a et de sa tête coupante 1₁b, jusqu'à l'extrémité de sa partie évasée 1₁d assurant la liaison entre la tige 1₁a et le manche 1₁c est de 19 mm.

La tige 1₁a présente, à des distances de 5,0, 7,5, 10,0, 12,5 et 15,0 mm de l'extrémité du foret, respectivement, des traits ou anneaux 3 de repérage de la profondeur à laquelle le foret est engagé dans le canal dentaire. Les traits ou anneaux de repérage pourront être réalisés par gravage, par laser ou encore simplement à l'aide d'un vernis coloré.

Dans le deuxième foret du jeu, portant le No 2, le diamètre D₂ de la tête coupante, désignée par 1₂b, est de 0,7 mm, la longueur totale L₂ du foret étant de 28,9 mm et la longueur de sa partie active l₂ de 15,9 mm. La tige, désignée par 1₂a de ce foret ne présente que quatre traits annulaires 3 de repérage.

Quant au troisième foret du jeu, portant le No 3, le diamètre D₃ de sa tête 1₃b est de 0,9 mm, sa longueur totale L₃ de 26,4 mm et la longueur de sa partie active l₃ de 13 mm. La tige, désignée par l₃a, de ce foret porte trois traits annulaires de repérage 3.

Le foret No 4 du jeu présente une tête coupante 1₄b dont le diamètre D₄ est de 1,10mm. Sa longueur totale L₄ est de 24,3 mm et la longueur de sa partie active l₄ de 11,3 mm. Sa tige, désignée par 1₄a, présente deux traits annulaires de repérage 3.

La tête, désignée par 1₅b, du foret No 5 a un diamètre D₅ de 1,30 mm. La longueur totale L₅ de ce foret est de 22,5 mm et la longueur de sa partie active l₅ de 9,5 mm. La tige, désignée par 1₅a, de ce foret ne présente qu'un trait annulaire de repérage 3.

Enfin, le sixième et dernier foret du jeu, portant le No 6, présente une tête 1₆b dont le diamètre D₆ est de 1,50 mm. Sa longueur totale L₆ est de 21 mm et la longueur de sa partie active l₆ de 8 mm. La tige, très courte, désignée par 1₆a, de ce foret ne présente pas de trait annulaire de repérage.

Il est à remarquer que le manche de chacun des forets du jeu présente une ou plusieurs gorges annulaires 4 dont le nombre correspond au numéro du foret et qui sont destinées à permettre au dentiste d'identifier aisément les différents forets du jeu. Ces gorges 4 pourront être remplacées par des anneaux de couleur.

La réduction de la longueur de la partie active des différents forets du jeu suit une progression géométrique dont la raison est de 0,84, alors que la variation des diamètres de leur tête coupante suit une progression arithmétique.

La raison de la progression géométrique de la réduction des longueurs de col des forets du jeu pourrait être différente de 0,84. Cette réduction pourrait également être basée sur une progression arithmétique, de 2,2 mm, par exemple, pour chaque numéro des forets du jeu.

Le tableau qui suit indique les valeurs du diamètre de la tête coupante, la longueur de la partie active ou opérante, la longueur totale et le nombre des traits de repérage ou anneaux de chacun des six forets de Gates du jeu représenté à la fig. 2.

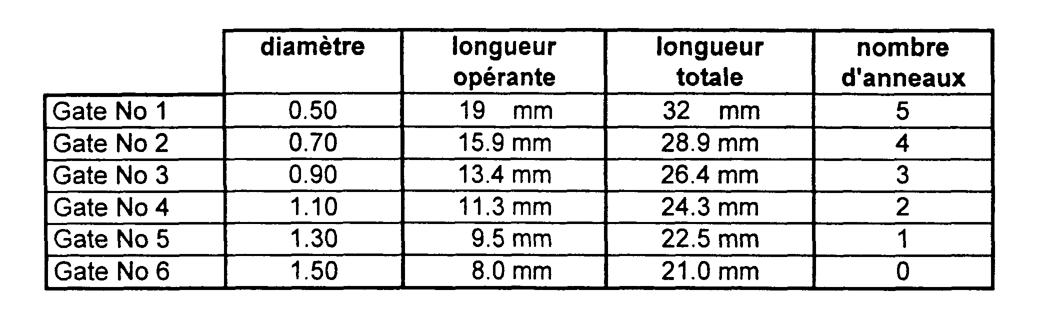

Grâce au présent jeu de forets, le praticien, qu'il procède selon la méthode dite "step-back" ou selon la méthode dite "crown-down", réalise aisément un alésage évasé de la partie coronaire du canal radiculaire, l'évasement ou la conicité du canal alésé correspondant à une valeur prédéterminée désirée. Il gagne du temps et travaille avec plus de sécurité, ne risquant pas, avec chaque foret du jeu, dont la longueur est fonction du diamètre de sa tête coupante, de pénétrer trop profondément dans le canal en voie d'alésage.

De plus, les forets de plus gros numéros étant courts, l'accès dans la cavité buccale est plus aisé.

## Revendications

1. Jeu de forets pour l'alésage de la partie coronaire des canaux radiculaires dentaires, du type dit de Gates, comprenant une tige se terminant, à son extrémité antérieure, par une tête de coupe présentant au moins une gorge hélicoïdale à arête coupante et se terminant, à son extrémité postérieure, par un manche, jeu dans lequel le diamètre de ladite tête coupante varie d'un foret à l'autre, **caractérisé par le fait que** la longueur de la partie active lᵢ de chaque foret du jeu, c'est-à-dire la longueur de ladite tige et de la tête coupante, varie en fonction inverse du diamètre de ladite tête.

2. Jeu de forets suivant la revendication 1, **caractérisé par le fait que** la variation de la longueur de la partie active de chaque foret du jeu varie selon une progression géométrique alors que le diamètre de la tête coupante des forets varie selon une progression arithmétique.

3. Jeu de forets suivant la revendication 2, **caractérisé par le fait que** la raison de ladite progression géométrique est de 0,84.

4. Jeu de forets suivant la revendication 1, **caractérisé par le fait qu'**une partie au moins des tiges des forets du jeu sont munies d'au moins un repère destiné à indiquer au praticien la profondeur à laquelle il fait pénétrer le foret dans le canal dentaire.

## Patentansprüche

1. Bohrersatz für die Bohrung des kranzförmigen Teils der Zahnwurzelkanäle, vom als Gates bezeichneten Typ, eine Stange aufweisend, die, an ihrem vorne befindlichen Ende, mit einem Schneidkopf endet, der zumindest eine spiralförmige Verengung mit einer schneidenden Kante besitzt, und, an ihrem hinten befindlichen Ende, mit einem Griff endet, wobei in dem Satz der Durchmesser des besagten Schneidkopfes von einem Bohrer zum anderen variiert, **dadurch gekennzeichnet, daß** die Länge des aktiven Teils eines jeden Bohrers des Satzes, das heißt die Länge der besagten Stange und des Schneidkopfes, als inverse Funktion des Durchmessers des besagten Kopfes variiert.

2. Bohrersatz gemäß dem Anspruch 1, **dadurch gekennzeichnet, daß** die Änderung der Länge des aktiven Teils eines jeden Bohrers des Satzes gemäß einer geometrischen Reihe variiert, während der Durchmesser des Schneidkopfes der Bohrer gemäß einer arithmetischen Reihe variiert.

3. Bohrersatz gemäß dem Anspruch 2, **dadurch gekennzeichnet, daß** das Verhältnis der besagten geometrischen Reihe 0,84 ist.

4. Bohrersatz gemäß dem Anspruch 1, **dadurch gekennzeichnet, daß** zumindest ein Teil der Stangen der Bohrer des Satzes mit zumindest einer Referenzmarke ausgerüstet sind, die geeignet ist, dem praktizierenden Arzt die Tiefe, auf welche er den Bohrer in den Zahnkanal eindringen läßt, anzuzeigen.

## Claims

1. Set of drills for the boring of the coronary part of the dental channels of the roots, of the type called Gates, comporting a bar terminating, at its front end, with a cutting head presenting at least one helicoidal constriction with a cutting edge and terminating, at its back end, with a handle, set within which the diameter of said cutting head varies from one drill to another, **characterised by** the fact that the length of the active part of each drill of the set, this means the length of said bar and of the cutting head, varies as an inverse function of the diameter of said head.

2. Set of drills according to claim 1, **characterised by** the fact that the variation of the length of the active part of each drill of the set varies according to a geometrical progression whereas the diameter of the cutting head of the drills varies according to an arithmetical progression.

3. Set of drills according to claim 2, **characterised by** the fact that the ratio of said geometrical progession is 0.84.

4. Set of drills according to claim 1, **characterised by** the fact that at least one part of the bars of the drills of the set are equipped with at least one reference mark adapted to indicate to the practising person the depth at which he penetrates the drill into the dental channel.
